# EUROPÄISCHE PATENTSCHRIFT

(11) **EP 1 221 399 B1**
(45) Veröffentlichungstag und Bekanntmachung des Hinweises auf die Patenterteilung: **07.08.2002**
(21) Anmeldenummer: 01100005.6
(22) Anmeldetag: 03.01.2001
(51) Int. Cl.: B60P 1/44

(54) **Hubladebühnensystem**
Loading tailgate system
Système d' hayon élévateur

(43) Veröffentlichungstag der Anmeldung: 10.07.2002
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- EP-A- 0 541 421
- EP-A- 0 980 786
- DE-A- 19 545 908

## Beschreibung

Die Erfindung betrifft ein Hubladebühnensystem zur Befestigung an Fahrzeugen, umfassend eine Plattform und ein im wesentlichen parallelogrammförmiges Hubwerk mit zwei horizontal beabstandeten Tragarmen, einem asymmetrisch zum Hubwerk angeordneten Hubzylinder zum Heben und Senken der Plattform und einem schwenkbar um die Drehachse der beiden Tragarme gelagerten Parallelarm, an dem der Hubzylinder, mit dem nächstliegenden ersten Tragarm ein Kräftedreieck bildend, angelenkt ist.

Ein derartiges Hubladebühnensystem ist beispielsweise durch die EP 0 980 786 A1 bekanntgeworden.

Bei diesem Hubladebühnensystem wirkt der aus Platzgründen asymmetrisch zum Hubwerk sitzende Hubzylinder zunächst auf einen Hubzylinderhebel ein. Durch die asymmetrische Lage des Hubzylinders sind zur Krafteinleitung in den nächstliegenden ersten Tragarm und in den sehr viel weiter entfernten zweiten Tragarm unterschiedliche elastische Verformungen gegeben. Diese unterschiedliche elastische Verformung führt zu einem Differenzdrehwinkel der beiden Tragarme. Der Hubzylinder greift am freien Ende des Hubzylinderhebels an, der um die gemeinsame Drehachse der beiden Tragarme schwenkbar gelagert ist und der mit dem Hubzylinder ein Kräftedreieck bildet. Die Übertragung der Drehbewegung und der Kräfte vom Hubzylinderhebel auf den ersten Tragarm erfolgt über eine unmittelbar zwischen ihnen gebildete drehfeste Verbindung und auf den zweiten Tragarm mittelbar durch ein Torsionsund Biegeprofil. Der erste Tragarm und der Hubzylinderhebel sind auf eine um die gemeinsame Drehachse schwenkbare Lagerbuchse aufgepreßt und miteinander nahe der gemeinsamen Drehachse über einen Distanzpaßbolzen mit zugehöriger Schraubverbindung drehfest verbunden.

Es ist die Aufgabe der Erfindung, ein Hubladebühnensystem der eingangs genannten Art weiter zu vereinfachen.

Diese Aufgabe wird erfindungsgemäß dadurch gelöst, daß der Hubzylinder am ersten Tragarm und am Parallelarm über ein Kreuzgelenk angreift. Beispielsweise kann das Kreuzgelenk einen den Parallelarm und den ersten Tragarm miteinander verbindenden Gelenkbolzen umfassen, der jeweils schwenkbar um eine zur Bolzenachse rechtwinklige Achse am ersten Tragarm und am Parallelarm gelagert ist, wobei der Hubzylinder am Gelenkbolzen angreift.

Erfindungsgemäß wird vorgeschlagen, den Hubzylinder mittels des Kreuzgelenks auf den ersten Tragarm und den Parallelarm einwirken zu lassen. Durch die direkte Einleitung der Kräfte in den ersten Tragarm entstehen in diesem minimale elastische Verformungen. Die Kraftweiterleitung an den zweiten Tragarm erfolgt vorzugsweise über ein Torsions- und Biegeprofil, das den Parallelarm und den zweiten Tragarm miteinander verbindet. Um den hierbei entstehenden Differenzdrehwinkel auszugleichen, ist erfindungsgemäß vorgesehen, daß bei unbelasteter Plattform der erste Tragarm und vorzugsweise auch der zweite Tragarm auf dem gesamten Hubschwenkweg dem Parallelarm im Bereich des Kreuzgelenks vorauseilt. Dies kann z.B. durch ein zwischen erstem Tragarm und Torsionsund Biegeprofil wirkendes Federelement erreicht werden, dessen maximale Federwirkung durch einen Anschlag begrenzt ist.

Bei besonders bevorzugten Ausführungsformen der Erfindung ist der Gelenkbolzen in den am ersten Tragarm bzw. am Parallelarm vorgesehenen Schwenklagern um seine Bolzenachse schwenkbar gelagert und ist der Hubzylinder am Gelenkbolzen drehfest befestigt. Alternativ kann der Gelenkbolzen in den Schwenklagern auch um seine Bolzenachse unverdrehbar gelagert sein, wenn der Hubzylinder drehbar am Gelenkbolzen gelagert ist.

Die am ersten Tragarm und am Parallelarm für den Gelenkbolzen vorgesehenen Schwenklager können als Bolzenlager oder als sphärisches Lager ausgebildet sein.

Vorzugsweise greift der Hubzylinder zwischen erstem Tragarm und Parallelarm am Kreuzgelenk an.

In einer bevorzugten Ausführungsform ist zu befestigung des Torsions- und Biegeprofils am Parallelarm und am zweiten Tragarm jeweils ein verbindungselement mit einer dem Profilquerschnitt entsprechenden Klemmschelle vorgesehen. Diese schraubbare Klemmschellenverbindung zwischen Torsions- und Biegeprofil und den Verbindungselementen erlaubt bei Verwendung gleicher Anschraubkonsolen den Anbau auch an Fahrzeuge mit stark unterschiedlichen Fahrgestellbreiten. Dies setzt natürlich voraus, daß die entsprechenden Verbindungselemente an der Plattform ebenfalls eine stufenlose Befestigungsmöglichkeit haben. Ein weiterer Vorteil besteht darin, daß das Torsions- und Biegeprofil überhaupt nicht bearbeitet zu werden braucht und nach der Oberflächenbehandlung direkt dem Hubladebühnenbausatz beigepackt werden kann. Beim Versand größerer Stückzahlen lassen sich die Torsions- und Biegeprofile, da keine sperrigen Teile angeschweißt sind, optimal platzsparend auf einer Palette verpacken.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch das erfindungsgemäße Hubladebühnensystem mit der Plattform in einer mittleren Arbeitsstellung zwischen dem Ladeboden des LKWs und dem Erdboden, in der sich die beiden Tragarme in einer etwa waagerechten Position befinden;
- Fig. 2: die Draufsicht des kompletten Hubladebühnensystems ohne Plattform, in seiner Befestigungsposition am Fahrgestellrahmen;
- Fig. 3: die Seitenansicht auf das Hubladebühnensystem entsprechend Richtung III in Fig. 1, wobei die Plattform in ihrer oberen und unteren Arbeitsstellung (gestrichelt) dargestellt ist;
- Fig. 4: die Seitenansicht auf das Hubladebühnensystem entsprechend Richtung IV in Fig. 1, wobei die Plattform in ihrer oberen und unteren Arbeitsstellung (gestrichelt) dargestellt ist;
- Fig. 5: eine Detailansicht des Kreuzgelenks entsprechend V in Fig. 1 bei unbelasteter Plattform; und
- Fig. 6: das Kreuzgelenk entsprechend Fig. 5, jedoch bei maximal belasteter Plattform.

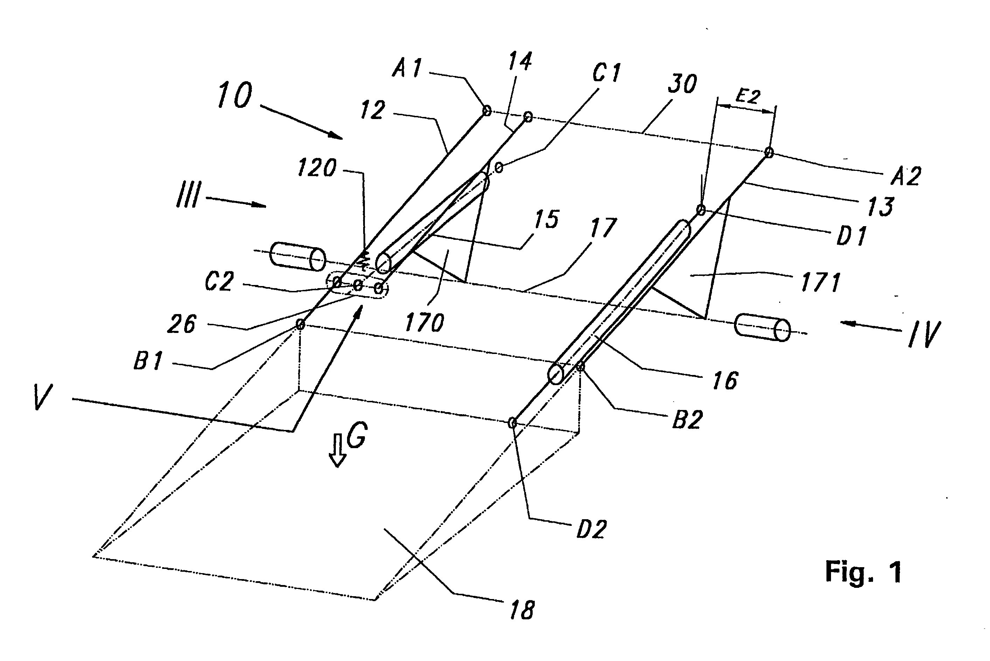

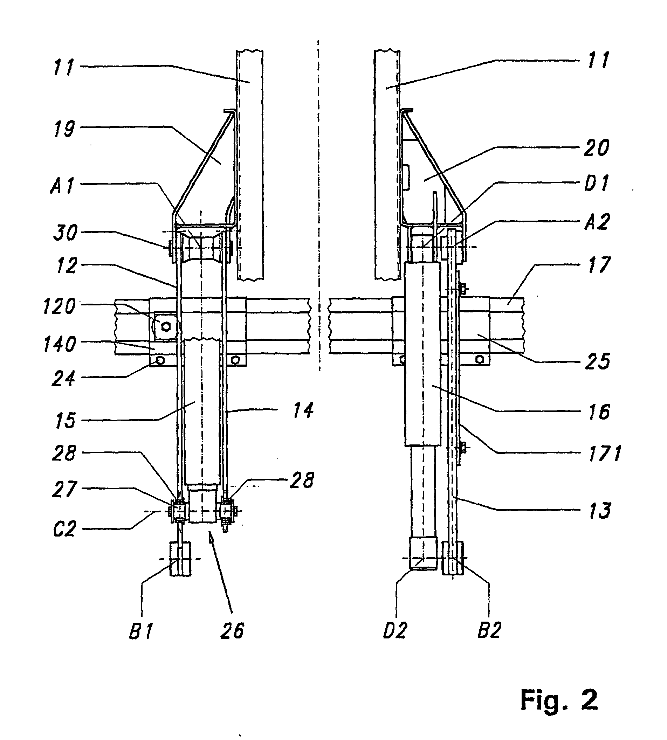

Bei dem in **Fig. 1** schematisch gezeigten Hubladebühnensystem **10** ist auf die Darstellung der Befestigung am Fahrgestellrahmen **11** (Fig. 2) aus Übersichtsgründen verzichtet. Die die Plattform **18** tragenden Systempunkte sind **A1** und **B1, A2** und **B2** sowie **D1** und **D2.**

Die Basiselemente des parallelogrammförmigen Hubwerks sind die beiden Tragarme **12** und **13**, die um die gemeinsame Drehachse **30** in den Drehpunkten A1 bzw. A2 fahrzeugseitig schwenkbar gelagert sind. Zwischen dem ersten Tragarm 12 und dem Parallelarm **14** liegt der asymmetrisch zum Hubwerk angeordnete Hubzylinder **15**, der an der fahrzeugseitig befestigten Anschraubkonsole **19** (Fig. 2) im Drehpunkt **C1** einerseits und am Tragarm 12 und am Parallelarm 14 mittels des Kreuzgelenks **26** im Drehpunkt **C2** andererseits befestigt ist. Diese Punkte C1, C2 und die gemeinsame Drehachse 30 bilden das Kräftedreieck für den Hubzylinder 15. Der zweite Tragarm **13** ist fahrzeugseitig an der Anschraubkonsole **20** befestigt. Der Parallelarm 14 und der zweite Tragarm 13 sind miteinander durch das Torsions- und Biegeprofil **17** verbunden, das am Parallelarm 14 mittels des Verbindungselements **170** und am Tragarm 13 mittels des Verbindungselements **171** befestigt ist. Am Tragarm **12** ist noch ein z.B. als Druckfeder ausgebildetes Federelement **120** befestigt, das sich unmittelbar auf dem Torsions- und Biegeprofil 17 abstützt. Der Parallelarm **14** und das Verbindungselement 170 sind vorzugsweise einteilig ausgebildet.

Das Ausfahren des Hubzylinders 15 führt zu einer Drehbewegung des Tragarms 12 und des Parallelarms 14 sowie über die Verbindungselemente 170, 171 und das Torsions- und Biegeprofil 17 auch zur gleichen Drehbewegung des Tragarm 13. Der Parallelzylinder **16**, der fahrzeugseitig im Punkt D1 und an der Plattform 18 bei D2 angelenkt ist, hat Funktionen, wie das Verschwenken der Plattform 18 in eine vertikale Fahrtstellung etc., die allgemein bekannt sind und auf die daher hier nicht eingegangen wird. Er dient außerdem zur Parallelführung und ist dazu, nach innen um den Abstand **E2** horizontal versetzt, parallel zum zweiten Tragarm 13 angeordnet.

Bei der Hub- und Senkbewegung der Plattform 18 wirkt der Parallelzylinder 16 als statische Druckstrebe. Der Versatz des Parallelzylinders 16 um den Abstand E2 gegenüber dem zweiten Tragarm 13 vermindert die Torsionsbelastung der entsprechend torsionssteif ausgebildeten Plattform 18 und übt daher eine stabilisierende Wirkung auf diese aus.

**Fig. 2** zeigt, daß der Tragarm 12 und der Parallelarm 14 gegeneinander drehbar und auf der gemeinsamen Drehachse 30 gemeinsam gelagert sind. Die Verbindungselemente 170, 171 sind jeweils mit Klemmschellen **24, 25** verschweißt, die wiederum das Torsions- und Biegeprofil 17 formschlüssig aufnehmen. Diese Elemente stellen den Kräftestrang dar.

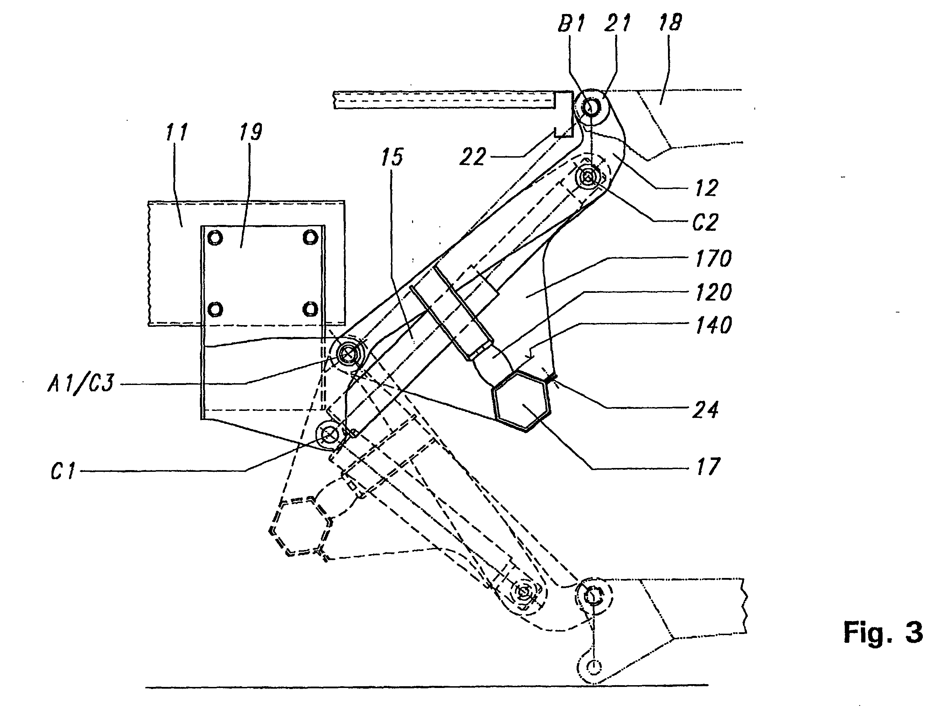

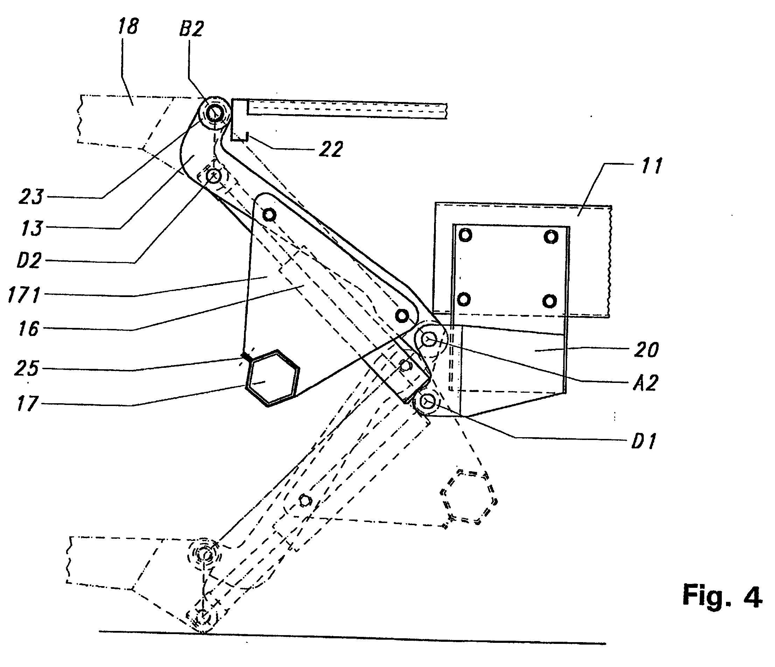

Wie die **Fign. 3 und 4** zeigen, liegen bei in ihre obere Arbeitsstellung angehobener Plattform 18 die beiden Tragarme 12, 13 mit ihren die Drehpunkte B1 und B2 definierenden Lageraugen **21, 23** am Heckschweller **22** des Fahrzeuges an, wodurch auch die Plattform 18 den Heckschweller 22 absatz- und spaltfrei erreicht.

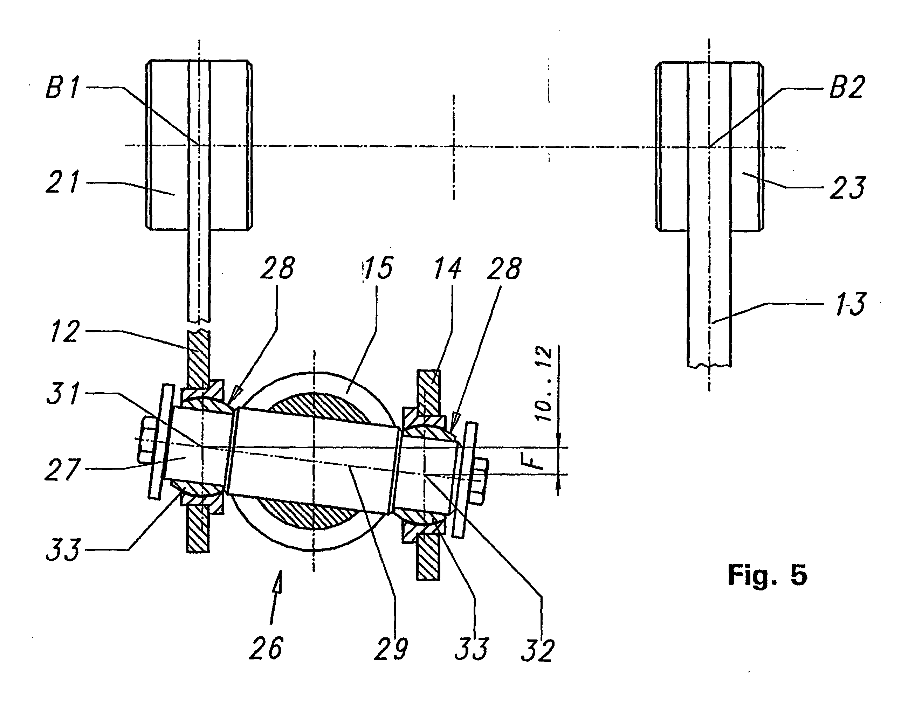

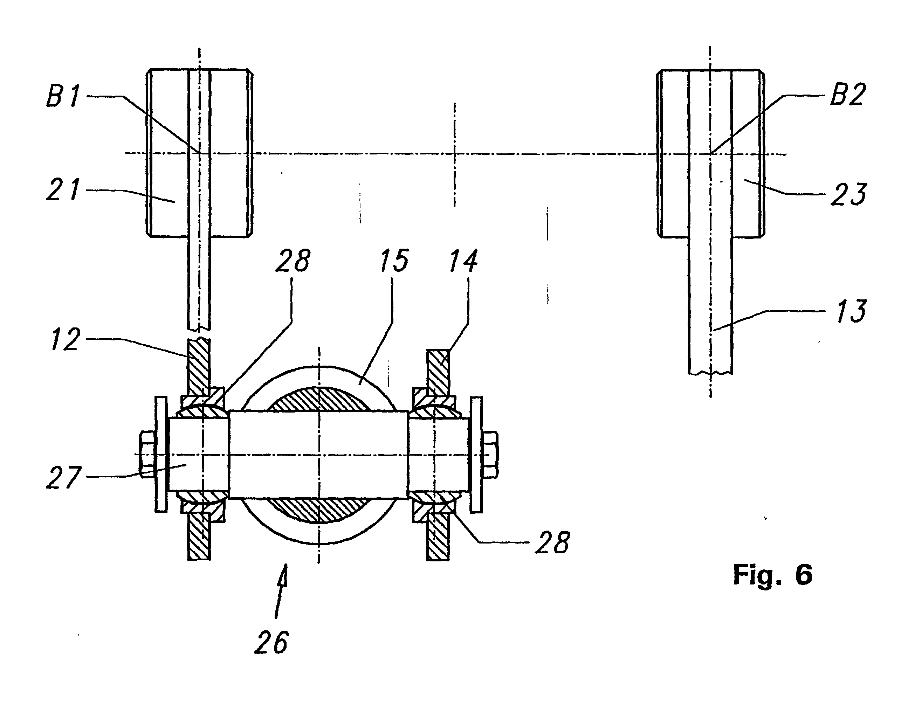

Das Kreuzgelenk 26 ist, wie in den **Fign. 5 und 6** gezeigt, durch einen den Parallelarm 14 mit dem Tragarm 12 verbindenden Gelenkbolzen **27** gebildet. Der Gelenkbolzen 27 ist in je einem sphärischen Schwenklager **28** am Tragarm 12 und am Parallelarm 14 jeweils schwenkbar um eine zur Bolzenachse **29** rechtwinklige Achse **31** bzw. **32** gelagert. Der Gelenkbolzen 27 ist in den Lagerkugeln **33** der beiden Schwenklager 28 schwenkbar um seine Bolzenachse 29 gelagert, so daß die Bolzenachse 29 gleichzeitig den Drehpunkt C2 für den am Gelenkbolzen 27 drehfest befestigten Hubzylinder 15 bildet.

Bei unbelasteter Plattform sind der zweite Tragarm 13 und durch das Federelement 120 der erste Tragarm 12 gegenüber dem Parallelarm 14 in Hubschwenkrichtung ausgelenkt. Im Bereich des Kreuzgelenks 26 befindet sich der Tragarm 12 in Hubschwenkrichtung um das Maß **F** von ca. 10-15 mm vor dem Parallelarm 14. Diese Auslenkung des Tragarms 12 gegenüber dem Parallelarm 14 bewirkt, daß der Gelenkbolzen 27 in die in Fig. 5 gezeigte Stellung verschwenkt, in der seine Bolzenachse 29 nicht parallel zur Drehachse 30 ist.

Erreichen die beiden Tragarme 12, 13 bei unbelasteter Plattform 18 den Heckschweller 22, ist deren Verdrehbewegung gestoppt. Wird jetzt die Funktion Heben weiter bedient, so daß der Hubzylinder 15 seinen vollen Druck aufbauen kann, führt der Parallelarm 14 gegen die Wirkung des Federelements 120 eine weitere Drehbewegung aus, bis der in dem Federelement 120 vorgesehene Anschlag **140** zwischen Tragarm 12 und Parallelarm 14 wirkt und so ein weiteres Zusammendrücken des Federelements 120 verhindert ist. Dann ist der Tragarm 12 nicht mehr gegenüber dem Parallelarm 14 ausgelenkt (d.h. F = 0). Entsprechend ist der Gelenkbolzen 27 in die in Fig. 6 gezeigte horizontale Stellung verschwenkt, in der seine Bolzenachse 29 parallel zur Drehachse 30 ist. Diese Schwenkbewegung des Gelenkbolzens 27 zwischen den in den Fign. 5 und 6 gezeigten Schwenkpositionen geht einher mit der elastischen Vorspannung des durch die Verbindungselemente 170, 171 und das Torsions- und Biegeprofil 17 definierten Kräftestrangs. Diese Vorspannung ist, wie unten näher beschrieben, notwendig, um den elastischen Drehwinkel bei voll belasteter Plattform auszugleichen.

In der Praxis muß von einer nicht mittigen Beladung ausgegangen werden. Liegt die Last einseitig in Richtung B1, ist der erste Tragarm 12 stärker belastet als der zweite Tragarm 13. Da der Hubzylinder 15 über das Kreuzgelenk 26 jeweils ein gleiches Drehmoment an Tragarm 12 und Parallelarm 14 erzeugt, wird das Federelement 120 zusammengedrückt, je nach Belastung bis zur Anlage des am ersten Tragarms 12 vorgesehenen Anschlags 140 am Torsions- und Biegeprofil 17. Dabei wird das Maß F = 0, wie in Fig. 6 gezeigt, und fast die ganze Hubzylinderkraft kann übertragen werden. Der hier vorauseilende zweite Tragarm 13 schlägt zuerst am Heckschweller 22 an. Die Rest-Hubzylinderkraft reicht aus, um das Torsionsund Biegeprofil 17 und den zweiten Tragarm 13 so weit elastisch zu verformen, daß auch der erste Tragarm 12 mit seinem Lageraugen 21 am Heckschweller 22 anschlägt.

Ist die einseitige Beladung in Richtung B2, erfolgt die Kräfteübertragung über den durch die Verbindungselement 170, 171 und das Torsions- und Biegeprofil 17 gebildeten Kräftestrang in den zweiten Tragarm 13. Durch die elastische Verformung des Kräftestrangs ergibt sich eine gewisse Schräglage der Plattform 18. Diese wird aber spätestens dann ausgeglichen, wenn der vorauseilende erste Tragarm 12 mit seinen Lageraugen 21 voreilend am Heckschweller 22 anschlägt. Durch die weitere Kräfteentwicklung des Hubzylinders 15 erfährt das Verbindungselement 170 eine weitere Drehbewegung, bis das Maß F = 0 wird. Dieser Weg reicht mehr als aus, die elastische Verformung des Kräftestrangs zu kompensieren. Damit ist sichergestellt, daß auch der zweite Tragarm 13 mit seinem Lagerauge 23 ebenfalls am Heckschweller 22 anschlägt.

Damit ist in beiden Fällen ein absatz- und spaltfreier Übergang von der Plattform 18 zum Heckschweller 22 gegeben. Damit nimmt dieses Hubladebühnensystem 10 in hohem Maße die praxisbedingten einseitigen Beladungen konstruktiv vorbestimmt auf und erreicht im Rahmen der zulässigen Tragfähigkeit immer spalt- und absatzfrei den Ladeboden des Fahrzeugs.

## Patentansprüche

1. Hubladebühnensystem (10) zur Befestigung an Fahrzeugen, umfassend eine Plattform (18) und ein im wesentlichen parallelogrammförmiges Hubwerk mit zwei horizontal beabstandeten Tragarmen (12, 13), einem asymmetrisch angeordneten Hubzylinder (15) zum Heben und Senken der Plattform (18) und einem schwenkbar um die Drehachse (30) der beiden Tragarme (12, 13) gelagerten Parallelarm (14), an dem der Hubzylinder (15), mit dem nächstliegenden ersten Tragarm (12) ein Kräftedreieck bildend, angelenkt ist,
**dadurch gekennzeichnet,**
**daß** der Hubzylinder (15) am ersten Tragarm (12) und am Parallelarm (14) über ein Kreuzgelenk (26) angreift.

2. Hubladebühnensystem nach Anspruch 1, **dadurch gekennzeichnet, daß** das Kreuzgelenk (26) einen den Parallelarm (14) und den ersten Tragarm (12) miteinander verbindenden Gelenkbolzen (27) umfaßt, der jeweils schwenkbar um eine zur Bolzenachse (29) rechtwinklige Achse (31, 32) am ersten Tragarm (12) und am Parallelarm (14) gelagert ist, und daß der Hubzylinder (15) am Gelenkbolzen (27) angreift.

3. Hubladebühnensystem nach Anspruch 2, **dadurch gekennzeichnet, daß** der Gelenkbolzen (27) in den am ersten Tragarm (12) bzw. am Parallelarm (14) für den Gelenkbolzen (27) vorgesehenen Schwenklagern (28) um seine Bolzenachse (29) schwenkbar gelagert ist und der Hubzylinder (15) am Gelenkbolzen (27) drehfest befestigt ist.

4. Hubladebühnensystem nach Anspruch 2, **dadurch gekennzeichnet, daß** der Gelenkbolzen (27) in den am ersten Tragarm (12) bzw. am Parallelarm (14) für den Gelenkbolzen (27) vorgesehenen Schwenklagern (28) um seine Bolzenachse (29) unverdrehbar gelagert ist und der Hubzylinder drehbar am Gelenkbolzen (27) gelagert ist.

5. Hubladebühnensystem nach einem der Ansprüche 2 bis 4, **dadurch gekennzeichnet, daß** die am ersten Tragarm (12) und am Parallelarm (14) für den Gelenkbolzen (27) vorgesehenen Schwenklager (28) als Bolzenlager oder als sphärisches Lager ausgebildet ist.

6. Hubladebühnensystem nach einem der vorhergehenden Ansprüche, **dadurch gekennzeichnet, daß** der Hubzylinder (15) zwischen erstem Tragarm (12) und Parallelarm (14) am Kreuzgelenk (26) angreift.

7. Hubladebühnensystem nach einem der vorhergehenden Ansprüche, **gekennzeichnet durch** ein Torsions- und Biegeprofil (17), das den Parallelarm (14) und den zweiten Tragarm (13) miteinander verbindet.

8. Hubladebühnensystem nach Anspruch 7, **dadurch gekennzeichnet, daß** zur Befestigung des Torsions- und Biegeprofils (17) am Parallelarm (14) und am zweiten Tragarm (13) jeweils Verbindungselemente (170, 171) mit einer dem Profilquerschnitt entsprechenden Klemmschelle (24, 25) vorgesehen sind.

9. Hubladebühnensystem nach einem der vorhergehenden Ansprüche, **gekennzeichnet durch** ein zwischen erstem Tragarm (12) und Parallelarm (14) wirkendes Federelement (120), **durch** dessen Wirkung der erste Tragarm (12) bei unbelasteter Plattform (18) auf dem gesamten Hubschwenkweg dem Parallelarm (14) im Bereich des Kreuzgelenks (26) vorauseilt.

10. Hubladebühnensystem nach Anspruch 9, **gekennzeichnet durch** einen den maximalen Federweg des Federelements (120) begrenzenden Anschlag (140).

## Claims

1. Lifting loading-platform system (10) for attachment to vehicles, comprising a platform (18) and an essentially parallelogram-shaped lifting mechanism with two horizontally spaced supporting arms (12, 13), an asymmetrically arranged lifting cylinder (15) for raising and lowering the platform (18) and a parallel arm (14), which is mounted in such a way as to be pivotable about the axis of rotation (30) of the two supporting arms (12, 13) and to which the lifting cylinder (15) is pivotally connected, forming a triangle of forces with the first supporting arm (12), which is the nearest, **characterised in that** the lifting cylinder (15) engages on the first supporting arm (12) and on the parallel arm (14) via a universal joint (26).

2. Lifting loading-platform system according to Claim 1, **characterised in that** the universal joint (26) comprises a joint pin (27), which connects the parallel arm (14) and the first supporting arm (12) to one another and is mounted on the first supporting arm (12) and on the parallel arm (14) in such a way as to be pivotable about an axis (31, 32) at right angles to the pin axis (29), and **in that** the lifting cylinder (15) engages on the joint pin (27).

3. Lifting loading-platform system according to Claim 2, **characterised in that** the joint pin (27) is mounted in the pivot bearings (28) provided for the joint pin (27) on the first supporting arm (12) and on the parallel arm (14) in such a way as to be pivotable about its pin axis (29), and the lifting cylinder (15) is secured in a rotationally fixed manner on the joint pin (27).

4. Lifting loading-platform system according to Claim 2, **characterised in that** the joint pin (27) is mounted in the pivot bearings (28) provided for the joint pin (27) on the first supporting arm (12) and on the parallel arm (14) in such a way that it cannot rotate about its pin axis (29), and the lifting cylinder is mounted rotatably on the joint pin (27).

5. Lifting loading-platform system according to one of Claims 2 to 4, **characterised in that** the pivot bearings (28) provided for the joint pin (27) on the first supporting arm (12) and on the parallel arm (14) are designed as pin bearings or as spherical bearings.

6. Lifting loading-platform system according to one of the preceding claims, **characterised in that** the lifting cylinder (15) engages on the universal joint (26) between the first supporting arm (12) and the parallel arm (14).

7. Lifting loading-platform system according to one of the preceding claims, **characterised by** a torsional and bending profiled section (17), which connects the parallel arm (14) and the second supporting arm (13) to one another.

8. Lifting loading-platform system according to Claim 7, **characterised in that** respective connecting elements (170, 171) with a clamp (24, 25) corresponding to the cross section of the profiled section are provided for securing the torsional and bending profiled section (17) on the parallel arm (14) and on the second supporting arm (13).

9. Lifting loading-platform system according to one of the preceding claims, **characterised by** a spring element (120), which acts between the first supporting arm (12) and the parallel arm (14) and by means of the action of which the first supporting arm (12) moves ahead of the parallel arm (14) in the region of the universal joint (26) over the entire lifting and pivoting travel when the platform (18) is under no load.

10. Lifting loading-platform system according to Claim 9, **characterised by** a stop (140), which limits the maximum spring travel of the spring element (120).

## Revendications

1. Système de platefome élévatrice de chargement (10) destiné à être fixé à des véhicules, comprenant une plateforme (18) et un mécanisme de levage essentiellement en forme de parallélogramme et comportant deux bras de support distants horizontalement (12, 13), un vérin de levage disposé de façon dissymétrique (15) pour soulever et abaisser la plateforme (18) et un bras parallèle (14), monté de manière à pouvoir pivoter autour de l'axe de rotation (30) des deux bras de support (12, 13), et sur lequel le vérin de levage (15) est articulé, en formant un triangle des forces avec le premier bras de support le plus proche (12), **caractérisé en ce que** le vérin de levage (15) s'applique sur le premier bras de support (12) et attaque le bras parallèle (14) par l'intermédiaire d'un oint universel (26).

2. Système de platefome élévatrice de chargement selon la revendication 1, **caractérisé en ce que** le joint universel (26) comporte une broche d'articulation (27), qui relie le bras parallèle (14) et le premier bras de support (12) entre eux et est monté respectivement de manière à pouvoir pivoter (axe 31, 32) perpendiculaire à l'axe (29) de la broche sur le premier bras de support (12) et sur le bras parallèle (14) et que le vérin de levage (15) attaque la broche d'articulation (27).

3. Système de platefome élévatrice de chargement selon la revendication 2, **caractérisé en ce que** la broche d'articulation (27) est monté de manière à pouvoir pivoter autour de son axe (29) dans les paliers pivotants (28), qui sont prévus sur le premier bras de support (12) et sur le bras parallèle (14) pour la broche d'articulation (27), et le vérin de levage (15) est fixé d'une manière bloquée en rotation sur la broche d'articulation (27).

4. Système de plateforme élévatrice de chargement selon la revendication 2, **caractérisé en ce que** la broche d'articulation (25) est monté sans possibilité de rotation autour de son axe (29) dans les paliers pivotants (29) prévus sur le premier bras de support (12) et sur le bras parallèle (14) pour la broche d'articulation (27), et que le vérin de levage est monté de manière à pouvoir tourner sur le boulon articulation (27).

5. Système de plateforme élévatrice de chargement selon l'une des revendications 2 à 4, **caractérisé en ce que** le palier pivotant (28), qui est prévu sur le premier bras de support (12) et sur le bras parallèle (14) pour la broche d'articulation (27), est agencé sous la forme d'un palier pour boulon ou d'un palier sphérique.

6. Système de plateforme élévatrice de chargement selon l'une des revendications précédentes, **caractérisée en ce que** le vérin de levage (15) attaque le joint universel (26) entre le premier bras de support (12) et le bras parallèle (14).

7. Système de plateforme élévatrice de chargement selon l'une des revendications précédentes, **caractérisée par** un profilé (17) résistant à la torsion et à la flexion, entre le bras parallèle (14) et le second bras de support (13).

8. Système de plateforme élévatrice de chargement selon la revendication 7, **caractérisée en ce que** des éléments de liaison respectifs (170, 171) comportant un collier de serrage (24, 25) correspondant à la section transversale du profilé sont prévus pour la fixation du profilé (17) résistant à la torsion et à la flexion sur le bras parallèle (14) et sur le second bras de support (13).

9. Système de plateforme élévatrice de chargement selon des revendications précédentes, **caractérisée par** un élément de ressort (120) qui agit entre le premier bras de support (12) et le bras parallèle (14) et sous l'action duquel, alors que la plateforme (18) n'est pas chargée, le premier bras de support (12) précède, sur l'ensemble de la course de pivotement de levage, le bras parallèle (14) dans la zone du joint universel (26).

10. Système de plateforme élévatrice de chargement selon la revendication 9, **caractérisé par** une butée (140) qui limite la course maximale de débattement de l'élément de ressort (120).
